# EUROPEAN PATENT APPLICATION

(11) **EP 4 745 906 A1**
(43) Date of publication of application: **20.05.2026**
(21) Application number: 24853672.4
(22) Date of filing: 09.08.2024
(51) Int. Cl.: G06V 10/40, G06V 10/764, G06V 10/774, G06V 10/74, H04W 4/44

(54) **DATA ACQUISITION METHOD AND RELATED DEVICE THEREOF**

(30) Priority: 14.08.2023 CN 202311024088
(71) Applicant: Huawei Technologies Co., Ltd., Shenzhen, Guangdong 518129 (CN)
(72) Inventor: YUAN, Peng, Shenzhen, Guangdong 518129 (CN); PENG, Youcou, Shenzhen, Guangdong 518129 (CN); FENG, Bailan, Shenzhen, Guangdong 518129 (CN); ZHANG, Hongbo, Shenzhen, Guangdong 518129 (CN)
(74) Representative: Goddar, Heinz J.
(86) International application number: PCT/CN2024/110886
(87) International publication number: WO 2025/036262

(57) **Abstract**

This application discloses a data collection method and a related device thereof. A data collection process significantly minimizes manual participation, effectively saving both time and labor costs. The method in this application includes: First, a terminal device may send a first image belonging to a first scenario to a network device. Then, the network device may process the first image to obtain a first feature, and send the first feature to the terminal device. Then, the terminal device may process a second image to obtain a second feature, and detect, based on the first feature and the second feature, whether the first scenario and the second scenario are scenarios of a same category. If the first scenario and the second scenario are scenarios of a same category, the terminal device sends the second image to the network device. Finally, the network device may use the second image and the first image for subsequent model training.

## Description

This application claims priority to Chinese Patent Application No. 202311024088.6, filed with the China National Intellectual Property Administration on August 14, 2023 and entitled "DATA COLLECTION METHOD AND RELATED DEVICE THEREOF", which is incorporated herein by reference in its entirety.

### TECHNICAL FIELD

Embodiments of this application relate to artificial intelligence (artificial intelligence, AI) technologies, and in particular, to a data collection method and a related device thereof.

### BACKGROUND

In the autonomous driving field, to continuously optimize an autonomous driving model, an autonomous driving vendor needs to deploy a dedicated training database. Obtaining and mining hard example data is a key step in deploying the training database. With accelerated product implementation of autonomous driving technologies, how to automatically and efficiently collect massive high-value scenario training data to complete iterative model optimization becomes critical.

Currently, the autonomous driving vendor builds a dedicated data closed-loop platform to complete collection of training data, thereby completing deployment of the training database. In a training data collection process, there are usually different data mining requirements. This requires that the data closed-loop platform can collect a large amount of training data and determine a category of the training data. In this case, various classification models (classifiers) need to be trained and deployed on the platform, so that the category of the training data can be determined after the training data is collected, and then the training data is included in the training database.

In the foregoing process, training and deploying different classification models on the data closed-loop platform are not only time- and labor-consuming, but also limits a category of training data that can be collected by the data closed-loop platform.

### SUMMARY

Embodiments of this application provide a data collection method and a related device thereof. A data collection process significantly minimizes manual participation, effectively saving both time and labor costs, while also allowing collection of various categories of training data, which contributes to improving a training database in a system.

A first aspect of embodiments of this application provides a data collection method. The method includes:
A first terminal device receives a first feature from a network device, where the first feature indicates a first scenario; and the first terminal device obtains a second image, and processes the second image, thereby obtaining a second feature indicating a second scenario. It should be noted that the second image is an image of a specific category. In other words, the second scenario is a scenario of a specific category. Similarly, the first scenario is also a scenario of a specific category. Categories of the first scenario and the second scenario may be the same or may be different.

The first terminal device determines, based on the first feature and the second feature, whether a first image and the second image are images of a same category, that is, determines whether the first scenario and the second scenario are scenarios of a same category. If the first scenario and the second scenario are scenarios of a same category, the first terminal device sends the second image to the network device.

Based on the foregoing technical solution, when data collection is performed, the terminal device receives the first feature from the network device, that is, the terminal device may collect, based on the first feature, data that matches the first feature, thereby implementing directional data mining. In addition, a collection process significantly minimizes manual participation, effectively saving both time and labor costs.

In a possible implementation, the first terminal device may calculate a similarity between the first feature and the second feature, and determine whether the similarity between the first feature and the second feature is greater than or equal to a similarity threshold. If the similarity between the first feature and the second feature is greater than or equal to the similarity threshold, the first terminal device may determine that the first image and the second image are images of a same category, that is, the first scenario and the second scenario are scenarios of a same category. Therefore, the first terminal device may determine the second image as available data (target data), and send the second image to the network device. If the similarity between the first feature and the second feature is less than the similarity threshold, that is, the first scenario and the second scenario are scenarios of different categories, the terminal device may determine the second image as unavailable data (non-target data).

In a possible implementation, the terminal device first obtains the second image; encodes the second image by using a third model to obtain the second feature, where the second feature indicates the second scenario; and then detects whether the similarity between the first feature and the second feature is greater than or equal to the similarity threshold. If the similarity between the first feature and the second feature is greater than or equal to the similarity threshold, the terminal device sends the second image to the network device. In this implementation, a multi-modal foundation model library may be deployed on the terminal device. The multi-modal foundation model library includes a plurality of basic neural network processing models, for example, the third model. Using a universal and foundation model library eliminates the need to develop and deploy different algorithms and models for different scenarios or data, thereby reducing manpower, and development and deployment costs.

In a possible implementation, the first feature is a text feature.

In a possible implementation, that the first terminal device receives the first feature from the network device further includes: The first terminal device receives a first parameter from the network device. The first parameter indicates a frame rate at which the first terminal device subsequently sends an image to the network device. In the foregoing implementation, when delivering the first feature to the terminal device, the network device may further deliver the first parameter to the terminal device. The first parameter indicates the frame rate at which the terminal device subsequently sends an image to the network device. In this case, after determining the second image as available data, the terminal device may send the second image to the network device based on the frame rate indicated by the first parameter.

In a possible implementation, after the method, the method further includes: The first terminal device receives a second parameter from the network device, where the second parameter is used to adjust the frame rate at which the first terminal device sends an image to the network device; and the first terminal device sends a third image to the network device based on the second parameter. In the foregoing implementation, although the second image is determined by the terminal device as available data, the network device may further verify the second image, to finally determine whether the second image is available data. After the network device obtains a verification result, the network device may generate the second parameter, and send the second parameter to the terminal device. The second parameter is used to adjust the frame rate at which the terminal device subsequently sends an image to the network device. If the verification result indicates that the second image is available data, the second parameter is used to increase the frame rate at which the terminal device subsequently sends an image to the network device. Therefore, when the third image subsequently obtained by the terminal device and the first image are images of a same category, the terminal device may increase, based on the second parameter, the frame rate indicated by the first parameter, and send the third image to the network device based on an increased frame rate. If the verification result indicates that the second image is unavailable data, the second parameter is used to decrease the frame rate at which the terminal device subsequently sends an image to the network device. Therefore, when the third image subsequently obtained by the terminal device and the first image are not images of a same category, the terminal device may decrease, based on the second parameter, the frame rate indicated by the first parameter, and send the third image to the network device based on a decreased frame rate. It can be learned that the network device may perform secondary verification on the target data (namely, the second image) uploaded by the terminal device, thereby flexibly adjusting, based on a result of secondary verification, a rate at which the terminal device uploads subsequent data. In this way, the terminal device can reserve a sufficient bandwidth to provide another service for a user, thereby enhancing user experience.

In a possible implementation, after the method, the method further includes: The first terminal device receives a third parameter from the network device, where the third parameter indicates a verification result of the second image by the network device; and sends the third image to the network device based on the verification result. In the foregoing implementation, after the network device obtains the verification result, the network device may generate the third parameter, and send the third parameter to the terminal device. The third parameter indicates the verification result. The terminal device may adjust, based on the verification result indicated by the third parameter, the frame rate for subsequently sending an image to the network device. For example, if the verification result indicates that the second image is available data, the terminal device may increase the frame rate indicated by the first parameter, and send the third image to the network device based on an increased frame rate. If the verification result indicates that the second image is unavailable data, the terminal device may decrease the frame rate indicated by the first parameter, and send the third image to the network device based on a decreased frame rate. It can be learned that the terminal device flexibly adjusts, based on a result of secondary verification by the network device, a frame rate for uploading subsequent data. In this way, the terminal device can flexibly control an upload bandwidth, and may reserve a sufficient bandwidth to provide another service for a user, thereby enhancing user experience.

In a possible implementation, after the method, the method further includes: The first terminal device receives a fourth parameter from the network device, and adjusts the similarity threshold based on the fourth parameter. In the foregoing implementation, after the network device obtains the verification result, the network device may generate the fourth parameter, and send the fourth parameter to the terminal device. The fourth parameter is used to adjust the similarity threshold. If the verification result indicates that the second image is available data, the fourth parameter indicates that the terminal device may appropriately decrease the similarity threshold. Therefore, the terminal device decreases the current similarity threshold, and collects the third image based on a decreased similarity threshold. In this way, more data can be collected. If the verification result indicates that the second image is unavailable data, the fourth parameter is used to appropriately increase the similarity threshold. Therefore, the terminal device increases the current similarity threshold, and collects the third image based on an increased similarity threshold. In this way, accuracy of data sent from the terminal device to the network device can be improved. It can be learned that the terminal device flexibly controls, based on the verification result, a threshold for collecting subsequent data, so that the terminal device can improve data collection efficiency.

In a possible implementation, before the method, the method further includes: A second terminal device sends the first image to the network device based on a preset condition. The first image is an image in the first scenario. In the foregoing implementation, the first feature sent by the network device comes from the first image sent by the second terminal device. It should be understood that the second terminal device and the first terminal device may be a same terminal device or different terminal devices.

In a possible implementation, the preset condition includes: The second terminal device performs a first operation for the first scenario, the second terminal device or the user performs a second operation for the first scenario, and the first operation and the second operation are different. For example, the preset condition may be as follows: In autonomous driving, the first operation is an operation performed by an autonomous driving system, the second operation is an operation performed by the user during manual driving, and the autonomous driving system and the user perform different operations for a same scenario. For example, the preset condition may be as follows: Both the first operation and the second operation are performed by an autonomous driving system for a same scenario, but the first operation and the second operation are different. The preset condition may be described as follows: The terminal device discovers hard example data. It can be learned that the terminal device may mine various categories of hard example data (namely, the first image), which is equivalent to that the terminal device formulates a data mining requirement, and notifies the network device of the data mining requirement. In this way, a data collection system including the network device and the terminal device may automatically complete collection and mining of corresponding training data according to the data mining requirement. A requirement formulation process does not require manual participation. Therefore, not only costs can be reduced, but also efficiency and accuracy of data collection can be improved.

A second aspect of embodiments of this application provides a data collection method. The method includes: A network device sends a first feature to a first terminal device, where the first feature indicates a first scenario; the network device receives a second image sent by the first terminal device, and processes the second image to obtain a third feature, where the third feature indicates a second scenario; the network device generates, based on the first feature and the third feature, a verification result of whether the second scenario and the first scenario are scenarios of a same category; and the network device sends a second parameter and/or a third parameter to the first terminal device, where the second parameter is used to adjust a frame rate at which the first terminal device sends an image to the network device, and the third parameter indicates the verification result.

In a possible implementation, that the network device sends the first feature to the first terminal device further includes: The network device sends a first parameter to the first terminal device. The first parameter indicates the frame rate at which the first terminal device subsequently sends an image to the network device.

In a possible implementation, after the method, the method further includes: The network device sends a fourth parameter to the first terminal device. The fourth parameter is used to adjust a similarity threshold of the first terminal device.

In a possible implementation, before the method, the method further includes: The network device receives a first image sent by a second terminal device, and obtains the first feature based on the first image.

In a possible implementation, a multi-modal foundation model library is deployed on the network device. The multi-modal foundation model library includes a first model and a second model. For example, the network device may input the first image into the first model to convert the first image by using the first model, thereby obtaining a first text used to describe the first scenario. Then, the network device may input the first text into the second model to encode the first text by using the second model, thereby obtaining the first feature.

In a possible implementation, obtaining the first feature based on the first image includes: extending the first image to obtain an image set, where the image set includes one or more images; and processing the image set to obtain the first feature.

A third aspect of embodiments of this application provides a terminal device, including: a receiving module, configured to receive a first feature from a network device, where the first feature indicates a first scenario; a processing module, configured to process a second image to obtain a second feature, where the second feature indicates a second scenario; and a sending module, configured to send the second image to the network device if it is determined, based on the first feature and the second feature, that the first scenario and the second scenario are scenarios of a same category.

In a possible implementation, the sending module is configured to send the second image to the network device if it is determined that a similarity between the first feature and the second feature is greater than or equal to a similarity threshold.

In a possible implementation, the receiving module is further configured to receive a first parameter from the network device. The first parameter indicates a frame rate at which the terminal device subsequently sends an image to the network device.

In a possible implementation, the sending module is configured to send the second image to the network device based on the first parameter.

In a possible implementation, the receiving module is further configured to receive a second parameter from the network device, where the second parameter is used to adjust the frame rate at which the terminal device sends an image to the network device; and the sending module is further configured to send a third image to the network device based on the second parameter.

In a possible implementation, the receiving module is further configured to receive a third parameter from the network device, where the third parameter indicates a verification result of the second image by the network device; and the processing module is further configured to send the third image to the network device based on the verification result.

In a possible implementation, the receiving module is further configured to receive a fourth parameter from the network device; and the processing module is further configured to adjust the similarity threshold based on the fourth parameter.

In a possible implementation, the sending module is further configured to send a first image to the network device based on a preset condition.

In a possible implementation, the preset condition includes: The terminal device performs a first operation for the first scenario, the terminal device or a user performs a second operation for the first scenario, and the first operation and the second operation are different.

A fourth aspect of embodiments of this application provides a network device. The network device includes: a sending module, configured to send a first feature to a first terminal device, where the first feature indicates a first scenario; a receiving module, configured to: receive a second image sent by the first terminal device, and process the second image to obtain a third feature, where the third feature indicates a second scenario; and a processing module, configured to generate, based on the first feature and the third feature, a verification result of whether the second scenario and the first scenario are scenarios of a same category. The sending module is further configured to send a second parameter and/or a third parameter to the first terminal device. The second parameter is used to adjust a frame rate at which the first terminal device sends an image to the network device, and the third parameter indicates the verification result.

In a possible implementation, the sending module is further configured to send a first parameter to the first terminal device. The first parameter indicates the frame rate at which the first terminal device subsequently sends an image to the network device.

In a possible implementation, the sending module is further configured to send a fourth parameter to the first terminal device. The fourth parameter is used to adjust a similarity threshold of the first terminal device.

In a possible implementation, the receiving module is further configured to receive a first image sent by a second terminal device; and the processing module is further configured to obtain the first feature based on the first image.

In a possible implementation, the processing module is configured to: extend the first image to obtain an image set, where the image set includes one or more images; and process the image set to obtain the first feature.

A fifth aspect of embodiments of this application provides a terminal device. The terminal device includes a memory and a processor, the memory stores code, and the processor is configured to execute the code. When the code is executed, the terminal device performs the method according to any one of the first aspect or the possible implementations of the first aspect.

A sixth aspect of embodiments of this application provides a network device. The network device includes a memory and a processor, the memory stores code, and the processor is configured to execute the code. When the code is executed, the network device performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes the memory. The memory stores the computer program or the computer instructions.

A ninth aspect of embodiments of this application provides a computer storage medium. The computer storage medium stores a computer program. When the program is executed by a computer, the computer is enabled to implement the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to implement the method according to any one of the first aspect, the possible implementations of the first aspect, the second aspect, or the possible implementations of the second aspect.

An eleventh aspect of embodiments of this application provides a vehicle, and the vehicle includes the terminal device in any one of the third aspect or the possible implementations of the third aspect, or the fifth aspect.

In embodiments of this application, when the network device and the terminal device jointly collect data, the terminal device may send the first image belonging to the first scenario to the network device. Then, the network device may input the first image into the first model to convert the first image by using the first model, thereby obtaining the first text used to describe the first scenario. Then, the network device may: input the first text into the second model to encode the first text by using the second model, thereby obtaining the first feature; and send the first feature to the terminal device. Then, the terminal device may: encode the second image by using the third model to obtain the second feature, where the second feature indicates the second scenario; and detect whether the similarity between the first feature and the second feature is greater than or equal to the similarity threshold. If the similarity between the first feature and the second feature is greater than or equal to the similarity threshold, the terminal device sends the second image to the network device. Finally, the network device may classify the second image and the first image as training data that belongs to scenarios of a same category, for subsequent model training. In the foregoing process, the multi-modal foundation model library is deployed in the data collection system including the network device and the terminal device. The first model and the second model in the multi-modal foundation model library are deployed in the network device, and the third model in the multi-modal foundation model library is deployed in the terminal device. In this case, the network device may extract the first feature of the first image based on the first model and the second model, and the terminal device may extract the second feature of the second image based on the third model. Therefore, the terminal device may determine the similarity between the first feature and the second feature, to determine whether the first image and the second image are images of a same category (that is, whether the first scenario and the second scenario are scenarios of a same category). If the first image and the second image are images of a same category, the terminal device determines the second image as available training data and uploads the second image to the network device for storage. It can be learned that, by using the multi-modal foundation model library, the data collection system may take the first image as a collection template of training data, and automatically collect training data (the second image and the like) that belongs to a same category as the first image. The data collection process significantly minimizes manual participation, effectively saving both time and labor costs. In addition, because a category of the first image is not limited, the data collection system can successfully collect various categories of training data. This helps enrich and improve a training database in the system.

### BRIEF DESCRIPTION OF DRAWINGS

FIG. 1 is a diagram of a structure of an artificial intelligence main framework;
FIG. 2a is a diagram of a structure of a data collection system according to an embodiment of this application;
FIG. 2b is a diagram of a related device for data collection according to an embodiment of this application;
FIG. 3 is a diagram of an architecture of a system 100 according to an embodiment of this application;
FIG. 4 is a schematic flowchart of a data collection method according to an embodiment of this application;
FIG. 5a is a schematic flowchart of a data collection system according to an embodiment of this application;
FIG. 5b is another schematic flowchart of a data collection system according to an embodiment of this application;
FIG. 5c is another schematic flowchart of a data collection system according to an embodiment of this application;
FIG. 6 is another schematic flowchart of a data collection method according to an embodiment of this application;
FIG. 7 is another schematic flowchart of a data collection method according to an embodiment of this application;
FIG. 8 is a diagram of a structure of a terminal device according to an embodiment of this application;
FIG. 9 is a diagram of a structure of a network device according to an embodiment of this application;
FIG. 10 is a diagram of a structure of a terminal device according to an embodiment of this application;
FIG. 11 is a diagram of a structure of a network device according to an embodiment of this application; and
FIG. 12 is a diagram of a structure of a chip according to an embodiment of this application.

### DESCRIPTION OF EMBODIMENTS

Embodiments of this application provide a data collection method and a related device thereof. A data collection process significantly minimizes manual participation, effectively saving both time and labor costs, while also allowing collection of various categories of training data, which contributes to improving a training database in a system.

In the specification, claims, and the accompanying drawings of this application, the terms "first", "second", and the like are intended to distinguish between similar objects but do not necessarily describe a specific order or sequence. It should be understood that the terms used in such a way are interchangeable in proper circumstances, which is merely a discrimination manner that is used when objects having a same attribute are described in embodiments of this application. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

In the autonomous driving field, to continuously optimize an autonomous driving model, an autonomous driving vendor needs to deploy a dedicated training database. Obtaining and mining hard example data is a key step in deploying the training database. With accelerated product implementation of autonomous driving technologies, how to automatically and efficiently collect massive training data to complete iterative model optimization becomes critical.

Currently, the autonomous driving vendor builds a dedicated data closed-loop platform to complete collection of training data, thereby completing deployment of the training database. In a data collection process, there are usually different data mining requirements. This requires that the data closed-loop platform can collect a large amount of training data and determine a category of the training data. In this case, various classification models (classifiers) need to be trained and deployed on the platform, so that the category of the training data can be determined after the training data is collected, and then the training data is included in the training database.

In the foregoing process, training and deploying different classification models on the data closed-loop platform are not only time- and labor-consuming, but also limits a category of training data that can be collected by the data closed-loop platform.

Further, the data closed-loop platform is usually deployed on a network device, and cannot determine various data mining requirements. The data mining requirements need to be manually specified, which requires a large amount of manual participation. Once there is excessive manual participation, not only costs are increased, but also efficiency and accuracy of data collection are affected.

Further, a terminal device uploads collected data to the data closed-loop platform usually at a fixed frame rate, which lacks flexibility. In addition, whether the uploaded data meets a requirement is not considered (or availability of the uploaded data is not considered). Consequently, a bandwidth of the terminal device may be wasted.

To resolve the foregoing problem, an embodiment of this application provides a data collection method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using knowledge. In other words, the artificial intelligence technology is a branch of computer science, and attempts to understand essence of intelligence and produce a new intelligent machine that can react in a similar manner to human intelligence. Using artificial intelligence to process data is a common application manner of artificial intelligence.

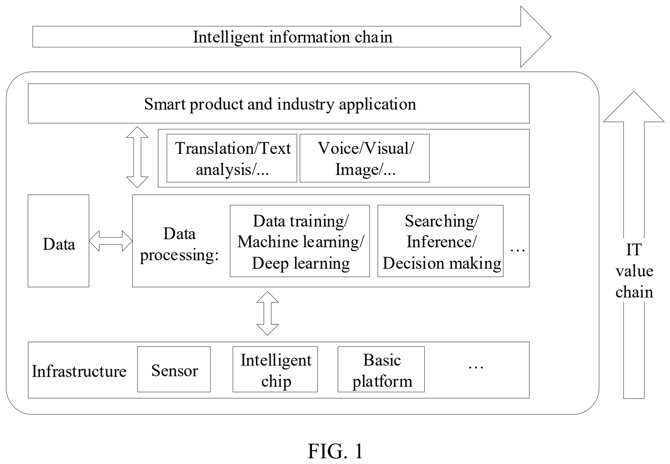

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the field of artificial intelligence. The data relates to a graph, an image, a speech, and a text, further relates to internet of things data of a conventional device, and includes service data of an existing system and perception data such as force, displacement, a liquid level, a temperature, and humidity.

### (3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision making is a process of making a decision after intelligent information is inferred, and usually provides functions such as classification, ranking, and prediction.

### (4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

### (5) Smart product and industry application

The smart product and industry application are products and applications of artificial intelligence systems in various fields, and are encapsulation for an overall artificial intelligence solution, to productize intelligent information decision making and implement applications. Application fields thereof mainly include an intelligent terminal, intelligent transportation, intelligent healthcare, autonomous driving, a smart city, and the like.

The following describes several application scenarios of this application.

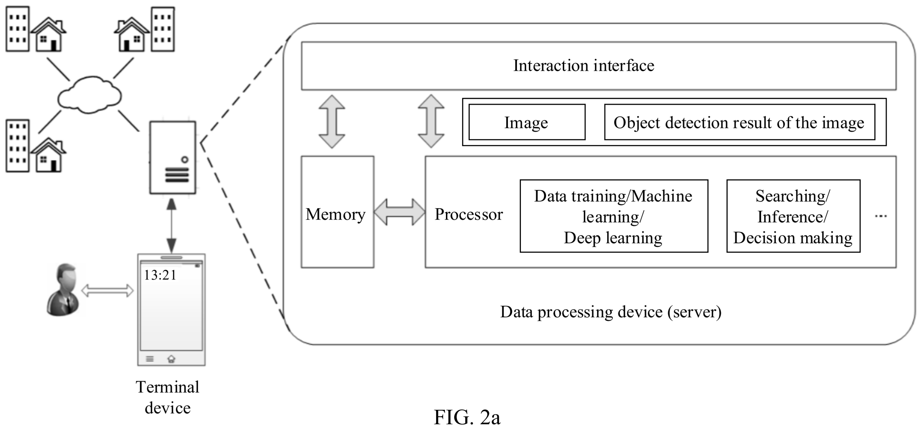

FIG. 2a is a diagram of a structure of a data collection system according to an embodiment of this application. The data collection system includes a terminal device and a data processing device (a network device). The terminal device includes an intelligent terminal such as a mobile phone, a personal computer, an intelligent vehicle (or a vehicle-mounted terminal, a domain controller, a computing platform, or the like), or a data collection center. The data processing device may be used as an initiator of data collection. As the initiator of a data collection request, the data processing device usually initiates a request to the terminal device, so that the terminal device completes collection of training data based on the data collection request.

The data processing device may be a device or a server that has a data processing function, for example, a cloud server, a network server, an application server, or a management server. The data processing device receives a data collection request from an intelligent terminal through an interaction interface, and then performs data collection in such manners as machine learning, deep learning, searching, inference, and decision making by using a data storage memory and a data processing processor. The memory in the data processing device may be a general name, and includes a local storage and a database that stores historical data. The database may be on the data processing device, or may be on another network server.

In the data collection system shown in FIG. 2a, the terminal device may receive an instruction of the data processing device. For example, the terminal device may obtain a data collection request of the data processing device, and then work with the data processing device to complete data collection based on the data collection request, and upload collected data to the data processing device, so that the data processing device constructs a database. For example, after receiving the data collection request from the data processing device, the terminal device may collect hard example data, and upload the hard example data to the data processing device. Then, the data processing device may process the hard example data, and deliver a feature of the hard example data to the terminal device. Then, the terminal device may collect target data, extract a feature of the target data, and compare the feature of the hard example data with the feature of the target data to determine whether the target data is available. If it is determined that the target data is available, the target data is uploaded to the data processing device, so that the data processing device classifies the target data into data that belongs to a same category or a same scenario as the hard example data.

In FIG. 2a, the data processing device and the terminal device may jointly perform the data collection method in embodiments of this application.

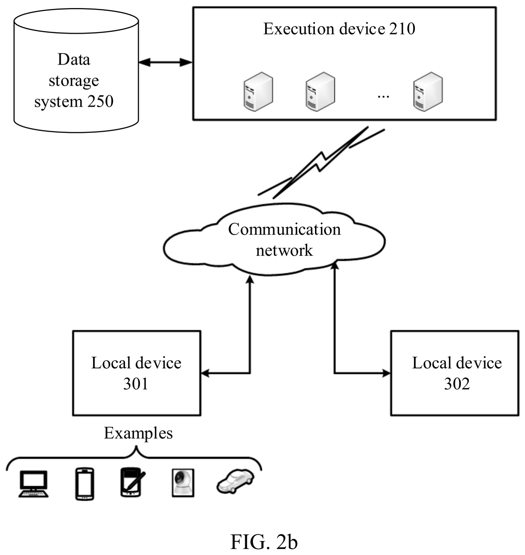

FIG. 2b is a diagram of a related device for data collection according to an embodiment of this application.

The terminal device in FIG. 2a may be specifically a local device 301 or a local device 302 in FIG. 2b. The data processing device in FIG. 2a may be specifically an execution device 210 in FIG. 2b. A data storage system 250 may store to-be-processed data of the execution device 210. The data storage system 250 may be integrated into the execution device 210, or may be disposed on a cloud or another network server.

A processor of the execution device or the local device in FIG. 2b may perform data training/machine learning/deep learning by using a neural network model or another model (for example, a model based on a support vector machine), and complete data collection application by using a model obtained through final data training or learning, to collect corresponding data.

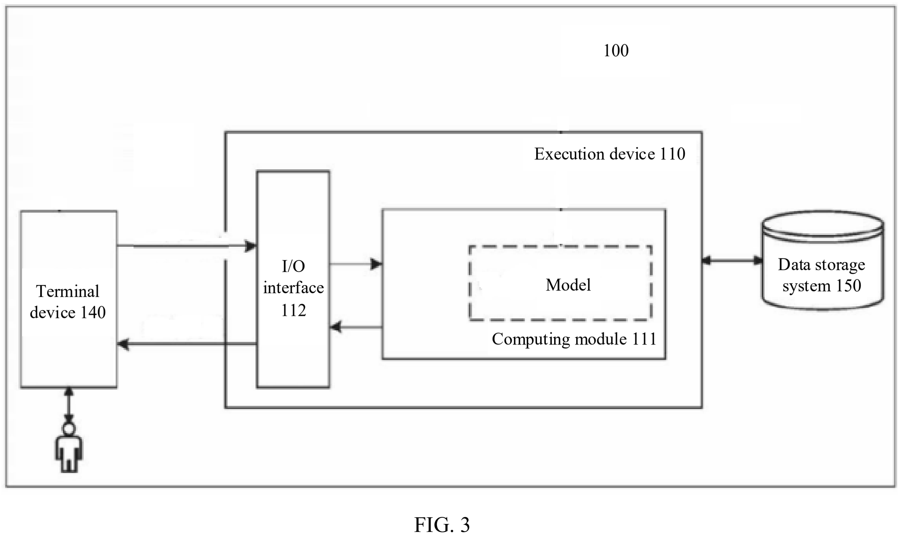

FIG. 3 is a diagram of an architecture of a system 100 according to an embodiment of this application. In FIG. 3, an input/output (input/output, I/O) interface 112 is configured for an execution device 110, configured to exchange data with an external device. The execution device 110 may input data to a client device 140 through the I/O interface 112. The input data in embodiments of this application may include a data collection request and another control parameter.

In this case, the terminal device 140 may discover, collect, and upload hard example data to the execution device 110 based on the input data. In a process in which the execution device 110 preprocesses the hard example data, or a computing module 111 of the execution device 110 performs related processing such as computing (for example, performs function implementation of a neural network model in this application), the execution device 110 may invoke data, code, and the like in a data storage system 150 for corresponding processing, and may further store, in the data storage system 150, the hard example data, a feature of the hard example data obtained through corresponding processing, and the like.

In addition, the execution device 110 may further send the feature of the hard example data to the terminal device 140 through the I/O interface 112. The terminal device 140 may further collect target data based on the feature sent by the execution device 110. For example, the terminal device 140 obtains the target data, extracts a feature of the target data, and compares the feature of the hard example data with the feature of the target data to determine, based on a comparison result, whether the target data is available. If it is determined that the target data is available, the terminal device 140 may send the target data to the execution device 110. In this way, the execution device 110 may store the obtained target data and the like in the data storage system 150. It should be noted that the hard example data and the target data that are stored in the data storage system 150 may be used as training data of a same category, and are invoked by the execution device, to complete training of another neural network model.

It should be noted that FIG. 3 is merely a diagram of an architecture of a system according to an embodiment of this application. A position relationship between the devices, the components, the modules, and the like shown in the figure does not constitute any limitation. For example, in FIG. 3, the data storage system 150 is an external memory relative to the execution device 110. In another case, the data storage system 150 may alternatively be disposed in the execution device 110.

The following first briefly describes a data collection method provided in this application.

The data collection method provided in embodiments of this application may be implemented by using a data collection system. The system includes a network device and a terminal device. The network device and the terminal device may jointly perform the data collection method provided in embodiments of this application. Collected data may be used for model training on a network device side. A specific quantity of neural network models (pre-trained neural network models) may be deployed on both the network device and the terminal device. By using these neural network models, the network device and the terminal device may process hard example data, and discover target data associated with the hard example data to take the target data as available training data, thereby improving a training database. In this case, the network device may subsequently train another to-be-trained neural network model or continue to fine-tune the pre-trained neural network models on the network device and the terminal device by using the training data in the training database.

In addition, the data collection method provided in embodiments of this application may be applied to a plurality of fields. A preferred field is the autonomous driving field. Correspondingly, the network device may be a cloud server, and the terminal device may be a vehicle, a vehicle-mounted terminal, a domain controller, a computing platform, or the like. The network device and the terminal device may constitute a vehicle-cloud collaborative data collection system to complete mining and collection of training data.

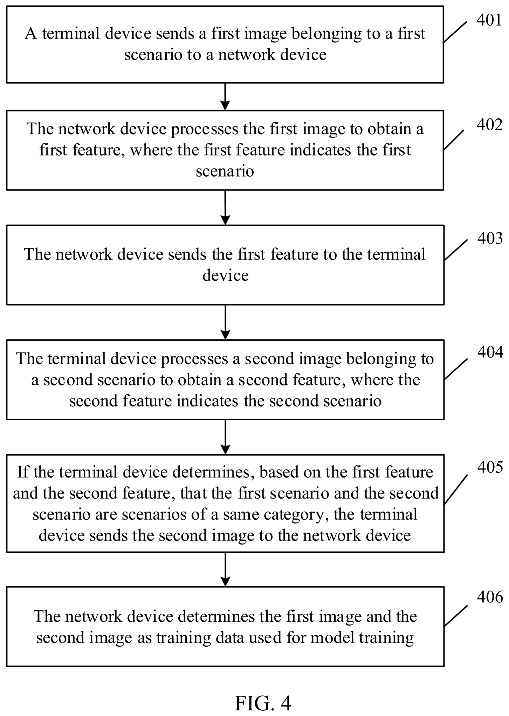

To further understand a working procedure of the data collection system provided in embodiments of this application, the following further describes the procedure with reference to FIG. 4. FIG. 4 is a schematic flowchart of a data collection method according to an embodiment of this application. As shown in FIG. 4, the method includes the following steps.

401: A terminal device sends a first image belonging to a first scenario to a network device.

In this embodiment, when the network device and the terminal device need to jointly collect data, the terminal device may first obtain the first image used to present the first scenario (where content presented by the first image is the first scenario, or it may be understood as that the first image belongs to the first scenario), and send the first image to the network device. It should be noted that the first image (which may also be referred to as hard example data) is usually an image that is of a specific category and that is discovered and collected by the terminal device. In other words, the first scenario is a scenario that is of a specific category and that is discovered and determined for collection by the terminal device. For example, the first scenario may be a scenario in which there is a small animal on a road in the autonomous driving field, and the scenario is one of scenarios in the autonomous driving field. The first scenario may alternatively be another scenario in the autonomous driving field, for example, a scenario in which a vehicle travels in a tunnel. The first scenario may alternatively be a scenario in another field. It can be learned that different scenarios in a same field may be considered as scenarios of different categories, and scenarios in different fields may also be considered as scenarios of different categories.

Specifically, the terminal device may obtain the first image and send the first image to the network device in the following manner.
(1) When the terminal device is in the first scenario, the terminal device may input the first image used to present the first scenario into a ninth model (an operation prediction model, which is a trained neural network model) to process the first image by using the ninth model, thereby obtaining a first operation for the first scenario. The foregoing example is still used. It is assumed that the first scenario is the scenario in which there is a small animal on a road in the autonomous driving field. When a user drives a vehicle in a scenario in which there is a black dog on a road, a vehicle-mounted terminal may further input an image used to present the scenario in which there is a black dog on a road into an operation prediction model, to obtain a driving operation 1 for the scenario in which there is a black dog on a road.
(2) When the terminal device is in the first scenario, the terminal device may further obtain a second operation for the first scenario. The second operation may be obtained in a plurality of manners. (2.1) When the terminal device is in the first scenario, real-time collection may be performed for the user (by using a sensor), thereby obtaining the second operation of the user for the first scenario through collection. For example, when the user drives the vehicle in the scenario in which there is a black dog on a road, the user may perform a driving operation for the scenario, and the vehicle-mounted terminal may capture, in real time, a driving operation 2 of the user for the scenario in which there is a black dog on a road. (2.2) When the terminal device is in the first scenario, the terminal device may input the first image used to present the first scenario into a tenth model (another operation prediction model, which is a trained neural network model) to process the first image by using the tenth model, thereby obtaining the second operation for the first scenario. The foregoing example is still used. The vehicle-mounted terminal may input an image used to present the scenario in which there is a black dog on a road into another operation prediction model, to obtain a driving operation 2 for the scenario in which there is a black dog on a road.
(3) After obtaining the first operation for the first scenario and the second operation for the first scenario, the terminal device may detect whether the first operation for the first scenario is the same as the second operation for the first scenario. If the first operation for the first scenario is different from the second operation for the first scenario, the terminal device may determine the first image used to present the first scenario as hard example data, and send the first image to the network device. The foregoing example is still used. If the vehicle-mounted terminal determines that the driving operation 1 and the driving operation 2 are different operations, the image used to present the scenario in which there is a black dog on a road is determined as a hard example image, and the image is uploaded to a cloud server.

More specifically, the terminal device may further obtain the first image and send the first image to the network device in the following manner.

The terminal device cannot obtain an operation for the first scenario. In other words, a model on the terminal device cannot derive an operation for the first scenario for the first image. For example, the model has not been trained for the first scenario or training effect is poor, which may require the user to take control. In this case, the terminal device may determine the first image used to present the first scenario as hard example data, and send the first image to the network device.

It should be understood that, in this application, that the terminal device collects data or an image may be that the terminal device performs collection by using a collection capability of the terminal device. For example, the terminal device is a vehicle, and the vehicle includes various vehicle-mounted sensors, for example, an image sensor (such as a camera) and a radar (a millimeter-wave radar, a lidar, or an ultrasonic radar), and may collect an image and data by using the vehicle-mounted sensor (such as the image sensor). Alternatively, the terminal device may control another device to perform collection. For example, the terminal device is a vehicle-mounted domain controller or a computing platform, and the vehicle-mounted domain controller may control a vehicle-mounted sensor to perform data or image collection and the like.

402: The network device processes the first image to obtain a first feature, where the first feature indicates the first scenario.

After obtaining the first image, the network device may obtain a first model (an image-text conversion model, which is a trained neural network model) and a second model (a text encoder, which is a trained neural network model) from a multi-modal foundation model library. Then, the network device may input the first image into the first model to convert the first image by using the first model, thereby obtaining a first text used to describe the first scenario. Then, the network device may input the first text into the second model to encode the first text by using the second model, thereby obtaining the first feature (which may be a text feature). The first image is used to present the first scenario. Therefore, the first feature obtained based on the first image may indicate the first scenario.

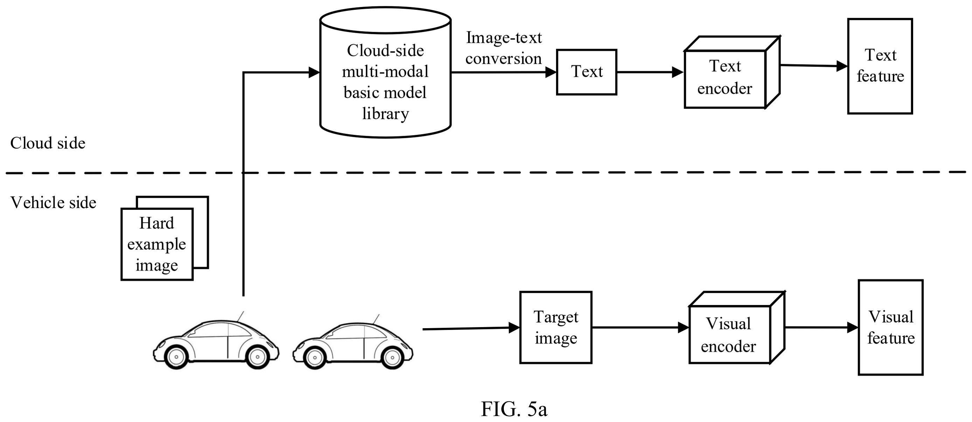

The foregoing example is still used. As shown in FIG. 5a (where FIG. 5a is a schematic flowchart of a data collection system according to an embodiment of this application), after obtaining an image used to present a scenario in which there is a black dog on a road, a cloud server may select an image-text conversion model (for example, BLIP-2 or MiniGPT-4) from a multi-modal foundation model library to process the image, to implement image2text, thereby obtaining a text used to describe the scenario in which there is a dog on a road, namely, "a photo of a dog on the road". Then, the cloud server may further select a text encoder from the multi-modal foundation model library to process the text to implement feature extraction, thereby obtaining a text feature.

Specifically, the network device may obtain the first feature in the following manner.
(1) After obtaining the first image, the network device may obtain the first model (the image-text conversion model, which is a trained neural network model) and a fifth model (an image-image enhancement model, which is a trained neural network model) from the multi-modal foundation model library. Then, the network device may input the first image into the first model to convert the first image by using the first model, thereby obtaining the first text used to describe the first scenario.
(2) After obtaining the first image and the first text, the network device may further input the first image into the fifth model to enhance (extend) the first image by using the fifth model, thereby obtaining an image set. The image set includes one or more images. The first scenario is associated with a scenario to which an image in the image set belongs. In other words, the first scenario and the scenario to which the image in the image set belongs are scenarios of a same category. For example, when the first scenario is a scenario in which there is a small animal on a road in the autonomous driving field, the scenario to which the image in the image set belongs is also the scenario in which there is a small animal on a road in the autonomous driving field.

In this case, after obtaining the first text and the image set, the network device may obtain the second model and a fourth model (a mapping model, which is a trained neural network model) through training by using the first text and the image set, and add the second model and the fourth model to the multi-modal foundation model library.

(3) Then, the network device may input the first text into the fourth model to map the first text by using the fourth model, thereby obtaining an intermediate feature. Then, the network device may input the intermediate feature into the second model to encode the intermediate feature by using the second model, thereby obtaining the first feature (which may also be understood as a text feature).

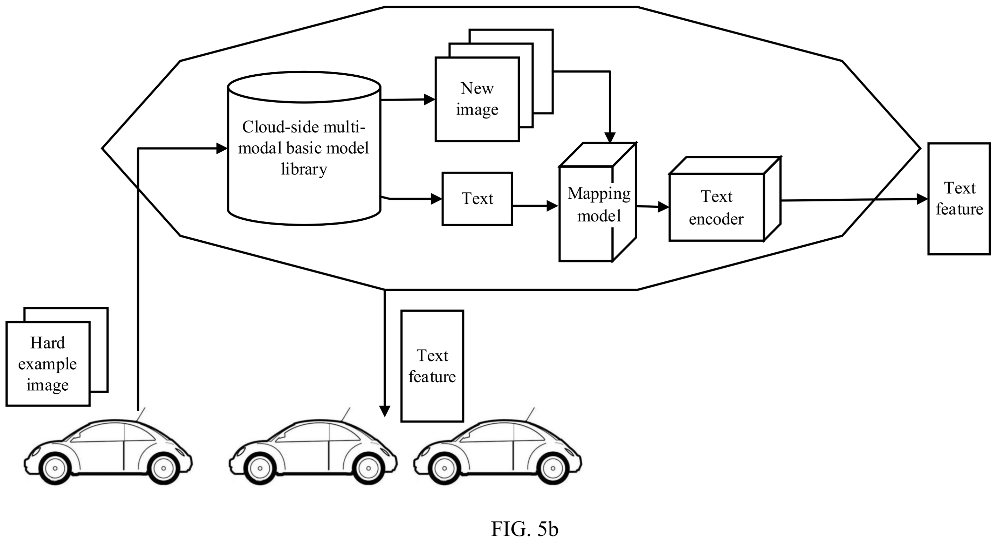

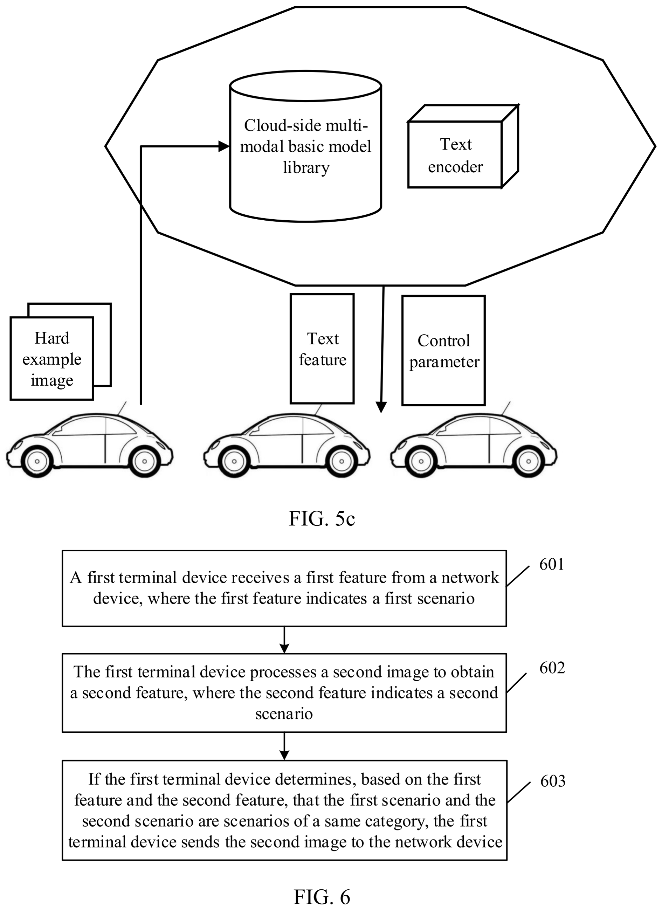

The foregoing example is still used. As shown in FIG. 5b and FIG. 5c (where FIG. 5b is another schematic flowchart of a data collection system according to an embodiment of this application, FIG. 5c is another schematic flowchart of a data collection system according to an embodiment of this application, and FIG. 5b and FIG. 5c are drawn based on FIG. 5a), after obtaining an image used to present a scenario in which there is a black dog on a road, a cloud server may select an image-text conversion model (for example, BLIP-2 or MiniGPT-4) from a multi-modal foundation model library to process the image, to implement image2text, thereby obtaining a text used to describe the scenario in which there is a dog on a road, namely, "a photo of a dog on the road".

Then, the cloud server may further select an image-image enhancement model (for example, Tag2text+DetCLIP+SAM+SD) from the multi-modal foundation model library to process the image, to implement image2image, thereby obtaining a new image used to present a scenario in which there is a bird on a road, a new image used to present a scenario in which there is a cat on a road, a new image used to present a scenario in which there is a deer on a road, and the like.

Then, the cloud server may select two pre-trained foundation models from the multi-modal foundation model library, and train (fine-tune) the two foundation models by using the text and the new images, thereby obtaining a mapping model and a text encoder. Then, the cloud server may process the text by using the mapping model to obtain an intermediate feature, and process the intermediate feature by using the text encoder to obtain a text feature.

It should be noted that an original multi-modal foundation model library includes a plurality of pre-trained foundation models. To make the entire model library adapt to the autonomous driving field, autonomous driving data may be used to fine-tune these foundation models, thereby obtaining a plurality of fine-tuned foundation models. The plurality of fine-tuned foundation models constitute the multi-modal foundation model library, and the plurality of fine-tuned foundation models include the image-text conversion model, the text encoder, the image-image enhancement model, the mapping model, a subsequent visual encoder, a subsequent large-size image-text conversion model, a subsequent large-size text encoder, a subsequent large-size visual encoder, and the like. These models are all obtained by fine-tuning the autonomous driving data. Therefore, results (for example, the text, the intermediate feature, the text feature, and the new image) output by these models all include more details and features related to each scenario in the autonomous driving field. In this way, the entire data collection system can be more adapted to the autonomous driving field. Certainly, if the data collection system is used in another field, data in the another field may also be used to fine-tune a model, or a plurality of pre-trained foundation models (namely, a plurality of universal foundation models) are directly used to complete collection of training data.

403: The network device sends the first feature to the terminal device.

After obtaining the first feature, the network device may send the first feature to the terminal device.

404: The terminal device processes a second image belonging to a second scenario to obtain a second feature, where the second feature indicates the second scenario.

After obtaining the first feature, the terminal device may collect the second image used to present the second scenario, obtain a third model from the multi-modal foundation model library, and then input the second image into the third model (a visual encoder, which is a trained neural network model) to encode the second image by using the third model, thereby obtaining the second feature (which may also be understood as a visual feature). The second image is used to present the second scenario. Therefore, the second feature obtained based on the second image may indicate the second scenario.

The foregoing example is still used. After the text feature is obtained, the cloud server may deliver the text feature to the vehicle-mounted terminal. After the text feature is obtained, in a process of driving the vehicle, the vehicle-mounted terminal may collect, in real time, an image used to present a scenario (for example, a scenario in which there is a chicken on a road), and determine the image as a to-be-detected target image. In this case, the vehicle-mounted terminal may process the image by using the visual encoder, thereby obtaining the visual feature.

405: If the terminal device determines, based on the first feature and the second feature, that the first scenario and the second scenario are scenarios of a same category, the terminal device sends the second image to the network device.

After obtaining the second feature, the terminal device may perform calculation on the first feature and the second feature, thereby obtaining a similarity between the first feature and the second feature. In this case, the terminal device may determine whether the similarity between the first feature and the second feature is greater than or equal to a similarity threshold (where the similarity threshold indicates a reference value for an image obtained by the terminal device to be available or a target, and may be set according to an actual requirement, or may be preset by the terminal device, or may be sent by the network device to the terminal device. The threshold may be unified, that is, applicable to scenarios of all categories, or may correspond to a scenario indicated by the first feature or the first feature, that is, may be different in scenarios of different categories. This is not limited herein.) If the similarity between the first feature and the second feature is greater than or equal to the similarity threshold, the terminal device may determine that the first image and the second image are images of a same category, that is, the first scenario and the second scenario are scenarios of a same category. Therefore, the terminal device may determine the second image as available data, and send the second image to the network device. If the similarity between the first feature and the second feature is less than the similarity threshold, the terminal device may determine that the first image and the second image are images of different categories, that is, the first scenario and the second scenario are scenarios of different categories. Therefore, the terminal device may determine the second image as unavailable data, and discard the second image.

Specifically, the terminal device may send the second image to the network device in the following plurality of manners.

When delivering the first feature to the terminal device, the network device may further deliver a first parameter to the terminal device. The first parameter indicates a frame rate (which may also be referred to as an upload frame rate) at which the terminal device subsequently sends an image to the network device. After determining the second image as available data, the terminal device may send the second image to the network device based on the first parameter.

It may be understood that the first parameter indicates the frame rate at which the terminal device subsequently sends an image to the network device, namely, a frame rate set by the network device for the terminal device. Therefore, after determining the second image as available data, the terminal device may send the second image to the network device based on the frame rate indicated by the first parameter.

The foregoing example is still used. The cloud server may deliver the text feature and a corresponding control parameter to the vehicle-mounted terminal. The control parameter includes the upload frame rate. Therefore, after determining that the similarity between the text feature and the visual feature is greater than or equal to the similarity threshold, the vehicle-mounted terminal may upload the target image to the cloud server based on the upload frame rate included in the control parameter.

406: The network device determines the first image and the second image as training data used for model training.

After obtaining the second image, the network device may classify the second image and the first image as data that belongs to scenarios of a same category, and store the second image and the first image in the training database. As the terminal device continuously uploads subsequent images, the network device may also determine the subsequent images as training data that belongs to a same category as the first image. In this way, the training data of this category may be continuously improved in the training database, and may be used for subsequent model training, to train a corresponding neural network model.

Specifically, the network device may further perform secondary mining (secondary verification) on the second image, to ensure quality of the training data.
(1) Although the second image is determined by the terminal device as available data, the network device may further verify the second image, to finally determine whether the second image is available data. Therefore, the network device may obtain a sixth model (a large-size image-text conversion model, which is a trained neural network model), a seventh model (a large-size text encoder, which is a trained neural network model), and an eighth model (a large-size visual encoder, which is a trained neural network model) from the multi-modal foundation model library. Then, the network device may input the first image into the sixth model to convert the first image by using the sixth model, thereby obtaining a second text used to describe the first scenario. Then, the network device may input the second text into the seventh model to encode the second text by using the seventh model, thereby obtaining a fourth feature (which may also be understood as a new text feature). The first image is used to present the first scenario. Therefore, the fourth feature obtained based on the first image may indicate the first scenario. Then, the network device may further input the second image into the eighth model to encode the second image by using the eighth model, thereby obtaining a third feature (which may also be understood as a new visual feature). The second image is used to present the second scenario. Therefore, the third feature obtained based on the second image may indicate the second scenario.

It should be noted that the sixth model has a larger size and better performance than the first model. Similarly, the seventh model has a larger size and better performance than the second model. Similarly, the eighth model has a larger size and better performance than the third model.

After obtaining the fourth feature and the third feature, the network device may calculate a similarity between the fourth feature and the third feature, and detect whether the similarity between the fourth feature and the third feature is greater than or equal to a similarity threshold.

If the similarity between the fourth feature and the third feature is greater than or equal to the similarity threshold, the network device may determine the second image as available data. In this case, the network device determines the first image and the second image as training data that belongs to a same category (that is, the network device determines the first scenario and the second scenario as scenarios of a same category), and stores the first image and the second image in a same area of the training database. If the similarity between the fourth feature and the third feature is less than the similarity threshold, that is, the second image does not meet a preset condition, the network device may determine the second image as unavailable data. In this case, the network device determines the first image and the second image as training data that belongs to different categories (that is, the network device determines the first scenario and the second scenario as scenarios of different categories), and stores the first image and the second image in different areas of the training database.

(2) Although the second image is determined by the terminal device as available data, the network device may further verify the second image, to finally determine whether the second image is available data. Therefore, the network device may obtain an eighth model (a large-size visual encoder, which is a trained neural network model) from the multi-modal foundation model library. Then, the network device may further input the second image into the eighth model to encode the second image by using the eighth model, thereby obtaining a third feature (which may also be understood as a new visual feature). The second image is used to present the second scenario. Therefore, the third feature obtained based on the second image may indicate the second scenario.

If a similarity between the first feature and the third feature is greater than or equal to a similarity threshold, the network device may determine the second image as available data. In this case, the network device determines the first image and the second image as training data that belongs to a same category (that is, the network device determines the first scenario and the second scenario as scenarios of a same category), and stores the first image and the second image in a same area of the training database. If the similarity between the first feature and the third feature is less than the similarity threshold, the network device may determine the second image as unavailable data. In this case, the network device determines the first image and the second image as training data that belongs to different categories (that is, the network device determines the first scenario and the second scenario as scenarios of different categories), and stores the first image and the second image in different areas of the training database.

It can be learned that the network device may obtain a verification result of the second image. The verification result indicates whether the first image and the second image are images of a same category or different categories, that is, indicates that the first scenario and the second scenario are scenarios of a same category or different categories.

More specifically, the network device may further adjust, based on availability of the second image, a frame rate at which the terminal device subsequently sends an image.
(1) After the network device obtains the verification result, the network device may generate a second parameter, and send the second parameter to the terminal device. The second parameter is used to adjust the frame rate at which the terminal device subsequently sends an image to the network device. If the verification result indicates that the first scenario and the second scenario are scenarios of a same category, the second parameter is used to increase the frame rate at which the terminal device subsequently sends an image to the network device. Therefore, when a third image subsequently collected by the terminal device and the first image are images of a same category (where the third image belongs to a third scenario, that is, the terminal device determines the first scenario and the third scenario as scenarios of a same category), the terminal device may increase, based on the second parameter, the frame rate indicated by the first parameter, and sends the third image to the network device based on an increased frame rate. If the verification result indicates that the first scenario and the second scenario are scenarios of different categories, the second parameter is used to decrease the frame rate at which the terminal device subsequently sends an image to the network device. Therefore, when a third image subsequently collected by the terminal device and the first image are images of a same category, the terminal device may decrease, based on the second parameter, the frame rate indicated by the first parameter, and send the third image to the network device based on a decreased frame rate.
(2) After the network device obtains the verification result, the network device may generate a third parameter, and send the third parameter to the terminal device. The third parameter indicates the verification result. If the terminal device determines, based on the verification result indicated by the third parameter, that the first scenario and the second scenario are scenarios of a same category, once the third image subsequently collected by the terminal device and the first image are images of a same category, the terminal device may increase the frame rate indicated by the first parameter, and send the third image to the network device based on an increased frame rate. If the terminal device determines, based on the verification result indicated by the third parameter, that the first scenario and the second scenario are scenarios of different categories, once the third image subsequently collected by the terminal device and the first image are images of a same category, the terminal device may decrease the frame rate indicated by the first parameter, and send the third image to the network device based on a decreased frame rate.
(3) In addition, after the network device obtains the verification result, the network device may generate a fourth parameter, and send the fourth parameter to the terminal device. The fourth parameter is used to adjust the similarity threshold. If the verification result indicates that the first scenario and the second scenario are scenarios of a same category, the fourth parameter is used to appropriately decrease the similarity threshold. Therefore, the terminal device decreases the current similarity threshold, and collects the third image and a subsequent image based on a decreased similarity threshold. The similarity threshold is appropriately decreased, so that the terminal device can collect more data, and the training database can be quickly supplemented. If the verification result indicates that the first scenario and the second scenario are scenarios of different categories, the fourth parameter is used to appropriately increase the similarity threshold. Therefore, the terminal device increases the current similarity threshold, and collects the third image based on an increased similarity threshold. The similarity threshold is increased, so that accuracy of available data obtained by the terminal device can be improved, and a waste of a user bandwidth can be avoided. It should be understood that the fourth parameter may alternatively be obtained based on secondary verification results of second images sent by a plurality of terminal devices (for example, a third terminal device and a fourth terminal device). The similarity threshold is adjusted with reference to the secondary verification results of the images sent by the plurality of terminal devices, so that availability of data obtained by the terminal device can be improved.

It should be understood that, in this embodiment of this application, the terminal device that performs step 401 and the terminal device that performs step 404 and step 405 may be a same terminal device. For example, the terminal device that performs step 401, step 404, and step 405 is a first terminal device. The terminal device that performs step 401 and the terminal device that performs step 404 and step 405 may be different terminal devices. For example, the terminal device that performs step 401 is a second terminal device, and the terminal device that performs step 404 and step 405 is a first terminal device. For example, the second terminal device sends the first image belonging to the first scenario to the network device, and the network device processes the first image to obtain the first feature, and sends the first feature to one or more terminal devices. The one or more terminal devices may include the first terminal device. The first terminal device obtains the second image, processes the second image to obtain the second feature, determines, based on the first feature and the second feature, whether the second image is target data, and sends the second image to the network device if it is determined that the second image is target data. The network device may import the second image into the database as scenario data of a same category as the first image, or the network device may perform secondary verification on the second image, and deliver a parameter (for example, a subsequent upload frame rate or a verification result of the terminal) based on the verification result. The first terminal device and the second terminal device may be a same terminal device or different terminal devices.

FIG. 6 is another schematic flowchart of a data collection method according to an embodiment of this application. As shown in FIG. 6, the method includes the following steps.

601: A first terminal device receives a first feature from a network device, where the first feature indicates a first scenario.

For a description of step 601, refer to the related descriptions of step 402 and step 403 in the embodiment shown in FIG. 4. Details are not described herein again.

602: The first terminal device processes a second image to obtain a second feature, where the second feature indicates a second scenario.

For a description of step 602, refer to the related description of step 404 in the embodiment shown in FIG. 4. Details are not described herein again.

603: If the first terminal device determines, based on the first feature and the second feature, that the first scenario and the second scenario are scenarios of a same category, the first terminal device sends the second image to the network device.

For a description of step 603, refer to the related description of step 405 in the embodiment shown in FIG. 4. Details are not described herein again.

In a possible implementation, that if the first terminal device determines, based on the first feature and the second feature, that the second image and the first scenario are the scenarios of the same category, the first terminal device sends the second image to the network device includes: If the first terminal device determines that a similarity between the first feature and the second feature is greater than or equal to a similarity threshold, the first terminal device sends the second image to the network device. For a description of this implementation, refer to the related description of step 405 in the embodiment shown in FIG. 4. Details are not described herein again.

In a possible implementation, that the first terminal device receives the first feature from the network device further includes: The first terminal device receives a first parameter from the network device. The first parameter indicates a frame rate at which the first terminal subsequently sends an image to the network device. For a description of this implementation, refer to the related description of step 405 in the embodiment shown in FIG. 4. Details are not described herein again.

In a possible implementation, that the first terminal device sends the second image to the network device includes: The first terminal device sends the second image to the network device based on the first parameter. For a description of this implementation, refer to the related description of step 405 in the embodiment shown in FIG. 4. Details are not described herein again.

In a possible implementation, after step 603, the method further includes: The first terminal device receives a second parameter from the network device, where the second parameter is used to adjust the frame rate at which the first terminal device sends an image to the network device; and the first terminal device sends a third image to the network device based on the second parameter. For a description of this implementation, refer to the related description of step 406 in the embodiment shown in FIG. 4. Details are not described herein again.

In a possible implementation, after step 603, the method further includes: The first terminal device receives a third parameter from the network device, where the third parameter indicates a verification result of the second image by the network device; and sends the third image to the network device based on the verification result. For a description of this implementation, refer to the related description of step 406 in the embodiment shown in FIG. 4. Details are not described herein again.

In a possible implementation, after step 603, the method further includes: The first terminal device receives a fourth parameter from the network device, and adjusts the similarity threshold based on the fourth parameter. For a description of this implementation, refer to the related description of step 406 in the embodiment shown in FIG. 4. Details are not described herein again.

In a possible implementation, before step 601, the method further includes: A second terminal device sends a first image to the network device based on a preset condition. For a description of this implementation, refer to the related description of step 401 in the embodiment shown in FIG. 4. Details are not described herein again.

In a possible implementation, the preset condition includes: The second terminal device performs a first operation for the first scenario, the second terminal device or a user performs a second operation for the first scenario, and the first operation and the second operation are different. For a description of this implementation, refer to the related description of step 401 in the embodiment shown in FIG. 4. Details are not described herein again.

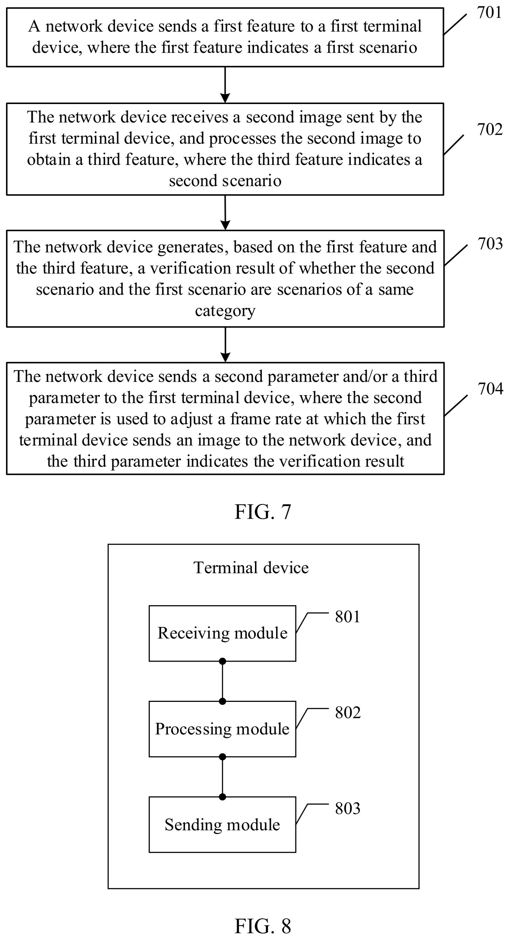

FIG. 7 is another schematic flowchart of a data collection method according to an embodiment of this application. As shown in FIG. 7, the method includes the following steps.

701: A network device sends a first feature to a first terminal device, where the first feature indicates a first scenario.

For a description of step 701, refer to the related descriptions of step 402 and step 403 in the embodiment shown in FIG. 4. Details are not described herein again.

702: The network device receives a second image sent by the first terminal device, and processes the second image to obtain a third feature, where the third feature indicates a second scenario.

For a description of step 702, refer to the related description of step 406 in the embodiment shown in FIG. 4. Details are not described herein again.

703: The network device generates, based on the first feature and the third feature, a verification result of whether the second scenario and the first scenario are scenarios of a same category.

For a description of step 703, refer to the related description of step 406 in the embodiment shown in FIG. 4. Details are not described herein again.

704: The network device sends a second parameter and/or a third parameter to the first terminal device, where the second parameter is used to adjust a frame rate at which the first terminal device sends an image to the network device, and the third parameter indicates the verification result.

For a description of step 704, refer to the related description of step 406 in the embodiment shown in FIG. 4. Details are not described herein again.

In a possible implementation, that the network device sends the first feature to the first terminal device further includes: The network device sends a first parameter to the first terminal device. The first parameter indicates the frame rate at which the first terminal device subsequently sends an image to the network device. For a description of this implementation, refer to the related description of step 405 in the embodiment shown in FIG. 4. Details are not described herein again.

In a possible implementation, the method further includes: The network device sends a fourth parameter to the first terminal device. The fourth parameter is used to adjust a similarity threshold of the first terminal device. For a description of this implementation, refer to the related description of step 406 in the embodiment shown in FIG. 4. Details are not described herein again.

In a possible implementation, before step 701, the method further includes: The network device receives a first image sent by a second terminal device, and obtains the first feature based on the first image. For a description of this implementation, refer to the related description of step 402 in the embodiment shown in FIG. 4. Details are not described herein again.

In a possible implementation, obtaining the first feature based on the first image includes: extending the first image to obtain an image set, where the image set includes one or more images; and processing the image set to obtain the first feature. For a description of this implementation, refer to the related description of step 402 in the embodiment shown in FIG. 4. Details are not described herein again.

In embodiments of this application, when the network device and the terminal device need to jointly collect training data, the terminal device may send the first image used to present the first scenario to the network device. Then, the network device may input the first image into a first model to convert the first image by using the first model, thereby obtaining a first text used to describe the first scenario. Then, the network device may: input the first text into a second model to encode the first text by using the second model, thereby obtaining the first feature; and send the first feature to the terminal device. Then, the terminal device may: encode, by using a third model, the second image used to present the second scenario, to obtain the second feature; and detect whether a similarity between the first feature and the second feature is greater than or equal to a similarity threshold. If the similarity between the first feature and the second feature is greater than or equal to the similarity threshold, the terminal device sends the second image to the network device. Finally, the network device may classify the second image and the first image as training data that belongs to a same category, for subsequent model training. In the foregoing process, the multi-modal foundation model library is deployed in the data collection system including the network device and the terminal device. The first model and the second model in the multi-modal foundation model library are deployed in the network device, and the third model in the multi-modal foundation model library is deployed in the terminal device. In this case, the network device may extract the first feature of the first image based on the first model and the second model, and the terminal device may extract the second feature of the second image based on the third model. Therefore, the terminal device may determine the similarity between the first feature and the second feature, to determine whether the first image and the second image are images of a same category (that is, whether the first scenario and the second scenario are scenarios of a same category). If the first image and the second image are images of a same category, the terminal device determines the second image as available training data and uploads the second image to the network device for storage. It can be learned that, by using the multi-modal foundation model library, the data collection system may take the first image as a collection template of training data, and automatically collect training data (the second image and the like) that belongs to a same category as the first image. The data collection process significantly minimizes manual participation, effectively saving both time and labor costs. In addition, because a category of the first image is not limited, the data collection system can successfully collect various categories of training data. This helps enrich and improve a training database in the system.

Further, in the data collection system provided in embodiments of this application, the terminal device may mine various categories of hard example data (namely, the first image), which is equivalent to that the terminal device formulates a data mining requirement, and notifies the network device of the data mining requirement. In this way, the data collection system including the network device and the terminal device may automatically complete collection and mining of corresponding training data according to the data mining requirement (taking hard example data as a collection template of training data). A requirement formulation process does not require manual participation. Therefore, not only costs can be reduced, but also efficiency and accuracy of data collection can be improved.

Further, in the data collection system provided in embodiments of this application, the network device may perform secondary mining on target data (namely, the second image) uploaded by the terminal device, to flexibly control, based on a result of secondary mining, a rate at which the terminal device uploads subsequent data. In this way, the terminal device can reserve a sufficient bandwidth to provide another service for a user, thereby enhancing user experience.

The foregoing describes in detail the data collection method provided in embodiments of this application. The following describes a data collection apparatus provided in embodiments of this application. The data collection apparatus includes a terminal device and a network device. FIG. 8 is a diagram of a structure of a terminal device according to an embodiment of this application. As shown in FIG. 8, the terminal device includes:
a receiving module 801, configured to receive a first feature from a network device, where the first feature indicates a first scenario;
a processing module 802, configured to process a second image to obtain a second feature, where the second feature indicates a second scenario; and
a sending module 803, configured to send the second image to the network device if it is determined, based on the first feature and the second feature, that the first scenario and the second scenario are scenarios of a same category.

In a possible implementation, the sending module 803 is configured to send the second image to the network device if it is determined that a similarity between the first feature and the second feature is greater than or equal to a similarity threshold.

In a possible implementation, the receiving module 801 is further configured to receive a first parameter from the network device. The first parameter indicates a frame rate at which the terminal device subsequently sends an image to the network device.

In a possible implementation, the sending module 803 is configured to send the second image to the network device based on the first parameter.

In a possible implementation, the receiving module 801 is further configured to receive a second parameter from the network device, where the second parameter is used to adjust the frame rate at which the terminal device sends an image to the network device; and the sending module 803 is further configured to send a third image to the network device based on the second parameter.

In a possible implementation, the receiving module 801 is further configured to receive a third parameter from the network device, where the third parameter indicates a verification result of the second image by the network device; and the processing module 802 is further configured to send the third image to the network device based on the verification result.

In a possible implementation, the receiving module 801 is further configured to receive a fourth parameter from the network device; and the processing module 802 is further configured to adjust the similarity threshold based on the fourth parameter.

In a possible implementation, the sending module 803 is further configured to send a first image to the network device based on a preset condition.

In a possible implementation, the preset condition includes: The terminal device performs a first operation for the first scenario, a second terminal device or a user performs a second operation for the first scenario, and the first operation and the second operation are different.

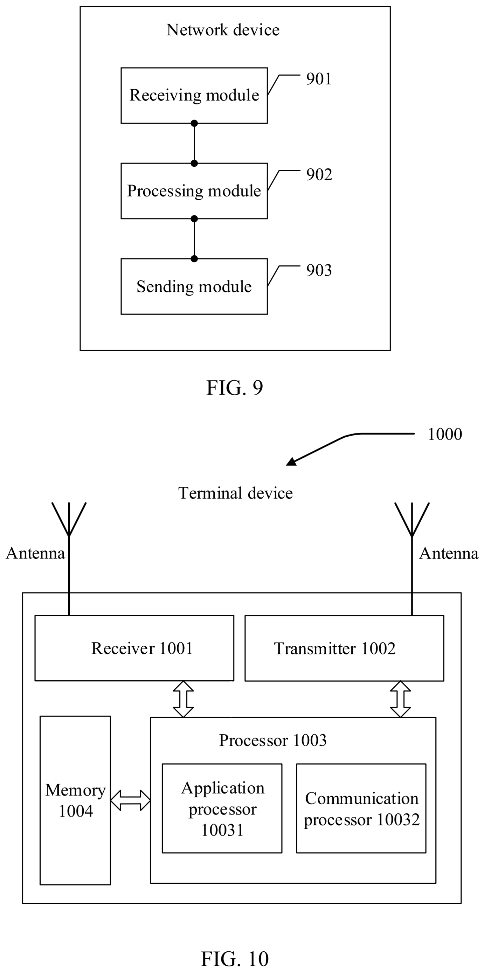

FIG. 9 is a diagram of a structure of a network device according to an embodiment of this application. As shown in FIG. 9, the network device includes:
a sending module 903, configured to send a first feature to a first terminal device, where the first feature indicates a first scenario;
a receiving module 901, configured to: receive a second image sent by the first terminal device, and process the second image to obtain a third feature, where the third feature indicates a second scenario; and
a processing module 902, configured to generate, based on the first feature and the third feature, a verification result of whether the second scenario and the first scenario are scenarios of a same category.

The sending module 903 is further configured to send a second parameter and/or a third parameter to the first terminal device. The second parameter is used to adjust a frame rate at which the first terminal device sends an image to the network device, and the third parameter indicates the verification result.

In a possible implementation, the sending module 903 is further configured to send a first parameter to the first terminal device. The first parameter indicates the frame rate at which the first terminal device subsequently sends an image to the network device.

In a possible implementation, the sending module 903 is further configured to send a fourth parameter to the first terminal device. The fourth parameter is used to adjust a similarity threshold of the first terminal device, and the first terminal device sends an image to the network device based on the adjusted similarity threshold.

In a possible implementation, the receiving module 901 is further configured to receive a first image sent by a second terminal device; and the processing module 902 is further configured to obtain the first feature based on the first image.

In a possible implementation, the processing module 902 is configured to: extend the first image to obtain an image set, where the image set includes one or more images; and process the image set to obtain the first feature.

It should be noted that content such as information exchange between the modules/units of the apparatuses and an execution process is based on the same concept as the method embodiments of this application, and produces the same technical effect as those of the method embodiments of this application. For specific content, refer to the foregoing descriptions in the method embodiments of this application. Details are not described herein again.

An embodiment of this application further relates to a terminal device. FIG. 10 is a diagram of a structure of a terminal device according to an embodiment of this application. As shown in FIG. 10, the terminal device 1000 may be specifically represented as a mobile phone, a tablet, a notebook computer, a smart wearable device, a vehicle, a vehicle-mounted terminal, a vehicle-mounted domain controller, a vehicle-mounted computing platform, a server, or the like. This is not limited herein. The apparatus described in the embodiment corresponding to FIG. 8 may be deployed on the terminal device 1000, and is configured to implement a data collection function in the embodiment corresponding to FIG. 6 and/or a function of the terminal device in FIG. 4. Specifically, the terminal device 1000 includes a receiver 1001, a transmitter 1002, a processor 1003, and a memory 1004 (where there may be one or more processors 1003 in the terminal device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions for various operations.

The processor 1003 controls an operation of the terminal device. During specific application, components of the terminal device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application is applied to the processor 1003, or may be implemented by the processor 1003. The processor 1003 may be an integrated circuit chip, and has a signal processing capability. In an implementation process, steps in the method can be implemented by using a hardware integrated logic circuit in the processor 1003, or by using instructions in a form of software. The processor 1003 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1003 may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor.

The receiver 1001 may be configured to: receive input digital or character information, and generate a signal input related to a related setting and function control of the terminal device. The transmitter 1002 may be configured to output the digital or character information through a first interface. The transmitter 1002 may be further configured to send instructions to a disk group through the first interface, to modify data in the disk group. The transmitter 1002 may further include a display device such as a display.

In embodiments of this application, in one case, the processor 1003 is configured to cooperate with the network device to complete collection of training data by using the third model in the embodiment corresponding to FIG. 4.

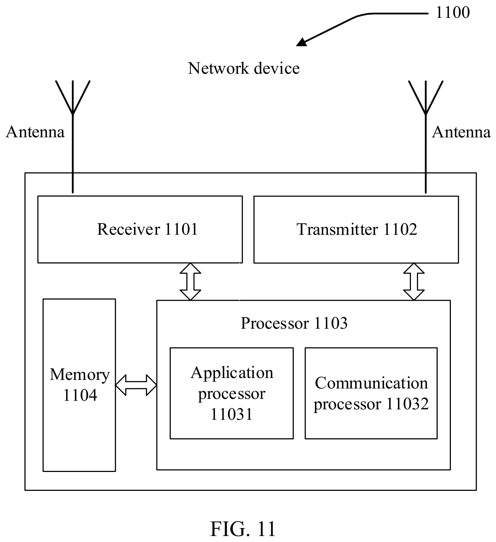

An embodiment of this application further relates to a network device. FIG. 11 is a diagram of a structure of a network device according to an embodiment of this application. As shown in FIG. 11, the network device 1100 may be specifically represented as a mobile phone, a tablet, a notebook computer, a smart wearable device, a server, or the like. This is not limited herein. The apparatus described in the embodiment corresponding to FIG. 9 may be deployed on the network device 1100, and is configured to implement a data collection function in the embodiment corresponding to FIG. 7 and/or a function of the network device in FIG. 4. Specifically, the network device 1100 includes a receiver 1101, a transmitter 1102, a processor 1103, and a memory 1104 (where there may be one or more processors 1103 in the network device 1100, and one processor is used as an example in FIG. 11). The processor 1103 may include an application processor 11031 and a communication processor 11032. In some embodiments of this application, the receiver 1101, the transmitter 1102, the processor 1103, and the memory 1104 may be connected through a bus or in another manner.

The memory 1104 may include a read-only memory and a random access memory, and provide instructions and data for the processor 1103. A part of the memory 1104 may further include a non-volatile random access memory (non-volatile random access memory, NVRAM). The memory 1104 stores a processor and operation instructions, an executable module or a data structure, a subnet thereof, or an extended set thereof. The operation instructions may include various operation instructions for various operations.

The processor 1103 controls an operation of the network device. During specific application, components of the network device are coupled together through a bus system. In addition to a data bus, the bus system may further include a power bus, a control bus, a status signal bus, and the like. However, for clear description, various types of buses in the figure are referred to as the bus system.

The method disclosed in embodiments of this application is applied to the processor 1103, or may be implemented by the processor 1103. The processor 1103 may be an integrated circuit chip, and has a signal processing capability. In an implementation process, steps in the method can be implemented by using a hardware integrated logic circuit in the processor 1103, or by using instructions in a form of software. The processor 1103 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1103 may implement or perform the methods, steps, and logical block diagrams that are disclosed in embodiments of this application. The general-purpose processor may be a microprocessor, or the processor may be any conventional processor or the like. The steps in the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1104, and the processor 1103 reads information in the memory 1104 and completes the steps in the foregoing methods in combination with hardware of the processor.

The receiver 1101 may be configured to: receive input digital or character information, and generate a signal input related to a related setting and function control of the network device. The transmitter 1102 may be configured to output the digital or character information through a first interface. The transmitter 1102 may be further configured to send instructions to a disk group through the first interface, to modify data in the disk group. The transmitter 1102 may further include a display device such as a display.

In embodiments of this application, in one case, the processor 1103 is configured to cooperate with the terminal device to complete collection of training data by using the first model, the second model, and the like in the embodiment corresponding to FIG. 4.

An embodiment of this application further relates to a computer storage medium. The computer-readable storage medium stores a program used for signal processing. When the program is run on a computer, the computer is enabled to perform the steps performed by the terminal device, or the computer is enabled to perform the steps performed by the network device.

An embodiment of this application further relates to a computer program product. The computer program product stores instructions. When the instructions are executed by a computer, the computer is enabled to perform the steps performed by the terminal device, or the computer is enabled to perform the steps performed by the network device.

An embodiment of this application further provides a vehicle. The vehicle includes the terminal device, for example, the terminal device shown in FIG. 8 or FIG. 10.

The network device or the terminal device that is provided in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the data processing method described in the foregoing embodiments, or a chip in a training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

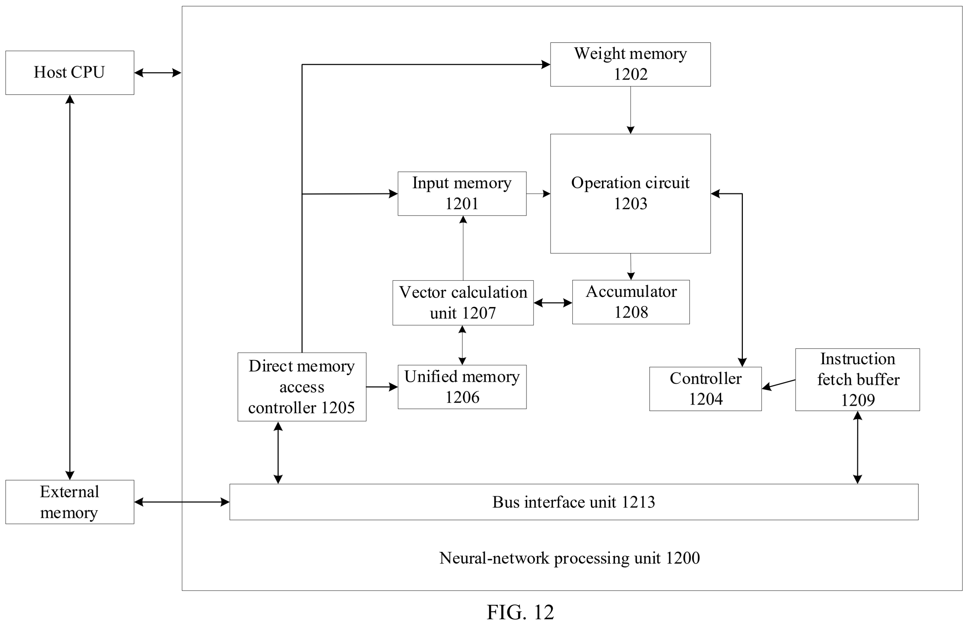

Specifically, FIG. 12 is a diagram of a structure of a chip according to an embodiment of this application. The chip may be represented as a neural-network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of process engines (Process Engines, PEs) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201 to perform a matrix operation with the matrix B, and stores an obtained partial result or an obtained final result of the matrix in an accumulator (accumulator) 1208.

A unified memory 1206 is configured to store input data and output data. Weight data is directly transferred to the weight memory 1202 by using a direct memory access controller DMAC (Direct Memory Access Controller, DMAC) 1205. The input data is also transferred to the unified memory 1206 by using the DMAC.

A BIU is a bus interface unit, namely, a bus interface unit 1213, and is configured to perform interaction between an AXI bus and the DMAC and between the AXI bus and an instruction fetch buffer (Instruction Fetch Buffer, IFB) 1209.

The bus interface unit (Bus Interface Unit, BIU for short) 1213 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector calculation unit 1207 includes a plurality of operation processing units. If required, further processing is performed on an output of the operation circuit 1203, for example, vector multiplication, vector addition, an exponential operation, a logarithmic operation, or size comparison. The vector calculation unit 1207 is mainly configured to perform network computation at a non-convolutional/fully-connected layer in a neural network, for example, batch normalization (batch normalization), pixel-level summation, and upsampling of a predicted label plane.

In some implementations, the vector calculation unit 1207 can store a processed output vector in the unified memory 1206. For example, the vector calculation unit 1207 may apply a linear function or a non-linear function to the output of the operation circuit 1203. For example, linear interpolation is performed on a predicted label plane extracted at a convolutional layer. For another example, vectors whose values are accumulated are used to generate an activation value. In some implementations, the vector calculation unit 1207 generates a normalized value, a pixel-level summation value, or both a normalized value and a pixel-level summation value. In some implementations, the processed output vector can be used as an activation input into the operation circuit 1203, for example, to be used at a subsequent layer in the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to an actual requirement to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

## Claims

1. A data collection method, wherein the method comprises:
receiving, by a first terminal device, a first feature from a network device, wherein the first feature indicates a first scenario;
processing, by the first terminal device, a second image to obtain a second feature, wherein the second feature indicates a second scenario; and
if the first terminal device determines, based on the first feature and the second feature, that the first scenario and the second scenario are scenarios of a same category, sending, by the first terminal device, the second image to the network device.

2. The method according to claim 1, wherein if the first terminal device determines, based on the first feature and the second feature, that the first scenario and the second scenario are the scenarios of the same category, sending, by the first terminal device, the second image to the network device comprises:
if the first terminal device determines that a similarity between the first feature and the second feature is greater than or equal to a similarity threshold, sending, by the first terminal device, the second image to the network device.

3. The method according to claim 1 or 2, wherein receiving, by the first terminal device, the first feature from the network device further comprises:
receiving, by the first terminal device, a first parameter from the network device, wherein the first parameter indicates a frame rate at which the first terminal device subsequently sends an image to the network device.

4. The method according to claim 3, wherein sending, by the first terminal device, the second image to the network device comprises:
sending, by the first terminal device, the second image to the network device based on the first parameter.

5. The method according to any one of claims 1 to 4, wherein after the method, the method further comprises:
receiving, by the first terminal device, a second parameter from the network device, wherein the second parameter is used to adjust the frame rate at which the first terminal device sends an image to the network device; and
sending, by the first terminal device, a third image to the network device based on the second parameter.

6. The method according to any one of claims 1 to 4, wherein after the method, the method further comprises:
receiving, by the first terminal device, a third parameter from the network device, wherein the third parameter indicates a verification result of the second image by the network device, and sending a third image to the network device based on the verification result.

7. The method according to any one of claims 2 to 6, wherein after the method, the method further comprises:
receiving, by the first terminal device, a fourth parameter from the network device, and adjusting the similarity threshold based on the fourth parameter.

8. The method according to any one of claims 1 to 7, wherein before the method, the method further comprises:
sending, by a second terminal device, a first image to the network device based on a preset condition, wherein the first image is an image in the first scenario.

9. The method according to claim 8, wherein the preset condition comprises: the second terminal device performs a first operation for the first scenario, the second terminal device or a user performs a second operation for the first scenario, and the first operation and the second operation are different.

10. A data collection method, wherein the method comprises:
sending, by a network device, a first feature to a first terminal device, wherein the first feature indicates a first scenario;
receiving, by the network device, a second image sent by the first terminal device, and processing the second image to obtain a third feature, wherein the third feature indicates a second scenario;
generating, by the network device based on the first feature and the third feature, a verification result of whether the second scenario and the first scenario are scenarios of a same category; and
sending, by the network device, a second parameter and/or a third parameter to the first terminal device, wherein the second parameter is used to adjust a frame rate at which the first terminal device sends an image to the network device, and the third parameter indicates the verification result.

11. The method according to claim 10, wherein sending, by the network device, the first feature to the first terminal device further comprises:
sending, by the network device, a first parameter to the first terminal device, wherein the first parameter indicates the frame rate at which the first terminal device subsequently sends an image to the network device.

12. The method according to claim 10 or 11, further comprising:
sending, by the network device, a fourth parameter to the first terminal device, wherein the fourth parameter is used to adjust a similarity threshold of the first terminal device.

13. The method according to any one of claims 10 to 12, wherein before the method, the method further comprises:
receiving, by the network device, a first image sent by a second terminal device, and obtaining the first feature based on the first image.

14. The method according to claim 13, wherein obtaining the first feature based on the first image comprises:
extending the first image to obtain an image set, wherein the image set comprises one or more images; and
processing the image set to obtain the first feature.

15. A terminal device, wherein the terminal device comprises:
a receiving module, configured to receive a first feature from a network device, wherein the first feature indicates a first scenario;
a processing module, configured to process a second image to obtain a second feature, wherein the second feature indicates a second scenario; and
a sending module, configured to send the second image to the network device if it is determined, based on the first feature and the second feature, that the first scenario and the second scenario are scenarios of a same category.

16. A network device, wherein the network device comprises:
a sending module, configured to send a first feature to a first terminal device, wherein the first feature indicates a first scenario;
a receiving module, configured to: receive a second image sent by the first terminal device, and process the second image to obtain a third feature, wherein the third feature indicates a second scenario; and
a processing module, configured to generate, based on the first feature and the third feature, a verification result of whether the second scenario and the first scenario are scenarios of a same category, wherein
the sending module is further configured to send a second parameter and/or a third parameter to the first terminal, wherein the second parameter is used to adjust a frame rate at which the first terminal sends an image to the network device, and the third parameter indicates the verification result.

17. A terminal device, wherein the terminal device comprises a memory and a processor, the memory stores code, and the processor is configured to execute the code; and when the code is executed, the terminal device performs the method according to any one of claims 1 to 9.

18. A network device, wherein the network device comprises a memory and a processor, the memory stores code, and the processor is configured to execute the code; and when the code is executed, the network device performs the method according to any one of claims 10 to 14.

19. A computer storage medium, wherein the computer storage medium stores one or more instructions; and when the instructions are executed by one or more computers, the one or more computers are enabled to implement the method according to any one of claims 1 to 14.

20. A computer program product, wherein the computer program product stores instructions; and when the instructions are executed by a computer, the computer is enabled to implement the method according to any one of claims 1 to 14.

21. A vehicle, wherein the vehicle comprises the terminal device according to claim 15 or 17.
